# EUROPEAN PATENT APPLICATION

(11) **EP 4 670 490 A1**
(43) Date of publication of application: **31.12.2025**
(21) Application number: 24185530.3
(22) Date of filing: 28.06.2024
(51) Int. Cl.: A01F 15/10

(54) **CROP CUTTING DEVICE**

(71) Applicant: CNH Industrial Belgium N.V., 8210 Zedelgem (BE)
(72) Inventor: DEVROE, Jeroen, 8210 Zedelgem (BE); LIEFOOGHE, Dries, 8210 Zedelgem (BE); ZWAENEPOEL, Nicolas, 8210 Zedelgem (BE)
(74) Representative: CNH Industrial IP Department

(57) **Abstract**

A crop cutting device (22) for an agricultural machine according to the present invention comprises a shaft (28) and a plurality of knives (26) pivotally mounted on the shaft (28) between a retracted position and an extended position. The shaft (28) comprises first engaging means (44a) and each knife (26) comprises second engaging means (38, 40), wherein the first and second engaging means (38, 40, 44a) are configured to engage with each other, when the shaft (28) is rotated to force at least one knife (26) into one of the retracted position and the extended position.

## Description

The present invention relates to a crop cutting device for an agricultural machine, such as a baler, in particular a large square baler, an agricultural machine comprising the crop cutting device, and a method of loosening at least one stuck knife of a plurality of knives of the crop cutting device.

Crop cutting devices are utilized within agricultural machines to facilitate the harvesting of crops by trimming them to a specified length or width. This process serves to regulate the overall density of the crop material, which can be further processed into various forms, such as bales. An example of an agricultural machine that employs a crop cutting device is a baler, in which a crop cutting device is provided to cut the picked-up crop material to a specified dimension before the crop is further processed into bales.

During agricultural operations of an agricultural machine, such as a baler, the crop material is transported from a pickup, which collects the crop material from the surface of a field, to the crop cutting device over a crop guiding surface, such as a plate. The crop cutting device usually comprises a rotary cutter and a plurality of knives acting as counter knives, which are usually provided in a knife drawer. There, the plurality of knives is usually supported on a shaft which is fixedly mounted and secured in the knife drawer. The plurality of knives may be moveable between a retracted position and an extended position and, in the extended position, may protrude via a respective slot through said plate to mesh with the rotary cutter in order to cut the crop material. Selectively arranging only some of the plurality of knives in the extended position allows for an adjustment of the cutting length or width and, thus, the density of the cut crop material. During operation of the crop cutting device, one or some of the plurality of knives may become stuck in said slots due to contamination by crop material or foreign matter, blocking the transition of a stuck knife from the extended position to the retracted position or vice versa, thereby hindering the operator of the agricultural machine from adjusting the cutting width of the crop cutting device.

Once one or more of the plurality of knives get stuck, it is necessary to perform a significant amount of laborious work in order to loosen these knives sufficiently to enable them to be selectively moved between the retracted and extended position. In order to loosen the at least one stuck knife, the knife drawer usually needs to be removed and cleaned. In addition or alternatively, the at least one stuck knife is often hammered into the retracted or extended position, which causes irreparable damage and bending of the knives and causes danger to the operator.

Hence, it is an object of the present invention to provide a crop cutting device for an agricultural machine, such as a baler, and a method, which allow for a quick, safe and harmless loosening of stuck knives.

This object is solved by the subject-matter of independent claims 1 and 15. Preferred embodiments of the invention are subject of the dependent claims.

According to a first aspect of the present invention, a crop cutting device for an agricultural machine, in particular for a baler, comprises a shaft rotatably supported by a frame of the crop cutting device, a plurality of knives arranged side-by-side with respect to an axial direction of the shaft and pivotally mounted on the shaft. The shaft comprises a first rotational position, in which the plurality of knives is freely pivotable with respect to the shaft between a retracted position and an extended position. The shaft is further configured to be selectively rotatable from the first rotational position in a clockwise or a counterclockwise direction towards a second rotational position. The shaft comprises first engaging means and each knife of the plurality of knives comprises second engaging means. The first engaging means and the second engaging means are configured to engage with each other, preferably by positive locking, when the shaft is rotated from the first rotational position towards the second rotational position to force at least one knife of the plurality of knives into one of the retracted position and the extended position, respectively.

In this way, at least one knife of the plurality of knives can be loosened when it gets stuck in one of or in between the retracted position and the extended position. The loosening of the at least one stuck knife only requires a rotation of the shaft in a clockwise or counterclockwise direction towards the second rotational position of the shaft. Removing a knife drawer and cleaning it may not be required or may only be needed in exceptional cases. Also, no direct and violent impact on the stuck knife is necessary. The crop cutting device according to the invention therefore provides a quick, safe and harmless as well as quite effortless loosening of stuck knives, which reduces the downtime of the crop cutting device in general.

The plurality of knives may also be referred to as counter knives which are configured to mesh with a rotary cutter of the cutting device, wherein the rotary cutter has a plurality of blades. Preferably, during operation of the cutting device, each knife of the plurality of knives rests either in the retracted position or in the extended position. The number of knives of the plurality of knives being arranged in the extended position depends on the desired cutting length of the crop material. Preferably, during operation of the crop cutting device, the shaft is fixedly positioned in the first rotational position. Only if needed, the shaft may be activated to rotate towards the second rotational position to loosen a stuck knife.

The plurality of knives is preferably supported by only the one shaft. The shaft may extend within a frame of the crop cutting device, e.g. within a knife drawer, in a lateral direction of the crop cutting device. The lateral direction of the crop cutting device is preferably orientated perpendicular to a harvesting direction or direction of travel of the agricultural machine. The plurality of knives is preferably directed parallel to the harvesting direction.

Preferably, the plurality of knives is freely rotatable between the retracted position and the extended position, which are angularly spaced apart from each other. The free rotational movement of the plurality of knives is preferably angularly limited. In embodiments, the shaft is rotatable irrespective of the position of the plurality of knives. If at least one knife gets stuck in one of or in between the retracted position and the extended position, the at least one stuck knife may initially limit the rotational movement of the shaft towards the second rotational position, thereby causing an interaction between the first engaging means of the shaft and the second engaging means of the respective knife. When the first engaging means and the second engaging means engage, preferably via positive locking, more torque can be applied to the shaft to loosen the respective stuck knife. Depending on the direction of rotation of the shaft, the at least one stuck knife may be forced towards the retracted position or towards the extended position, as desired.

In some embodiments, the crop cutting device further comprises an actuating system configured to select a desired number of knives to be activated and/or move the plurality of knives between the retracted position and the extended position. The actuating system is different from the shaft and any actuating means of the shaft. The actuating system allows to selectively set certain knives or groups of knives of the plurality of knives in one of the retracted position and the extended position. In this way, the cutting width and density of the crop material can be adjusted.

Actuating systems for moving the plurality of knives between the retracted position and the extended position are known in the art. For instance, the actuating system may comprise at least one actuator.

Preferably, the actuating system is provided and operated independently of the shaft and the rotation of the shaft. That is, the actuating system is in general provided in addition to the rotatable shaft supporting the plurality of knives. It has to be noted that the actuating system is neither suited nor provided to loosen any stuck knife.

In another embodiment, however, the rotatable shaft can be coupled with the actuator of the actuating system in order to be rotated from the first rotational position towards the second rotational position.

The shaft may comprise a locked condition, in which the shaft is locked in the first rotational position, preferably by interaction with the frame of the crop cutting device, and comprises a released condition, in which it is rotatable towards the second rotational position. When the shaft is locked in the first rotational position, selected knives of the plurality of knives, unless they are stuck, can be freely rotated about the shaft axis from one of the retracted position and the extended position to the other one of the retracted position and the extended without affecting the position of other knives. During normal operation, the shaft preferably is in the locked condition. The released condition allows the shaft to be freely turned from the first rotational position towards the second rotational position. Preferably, these conditions need to be actively changed by an operator of the crop cutting device and the agricultural machine, respectively. Therefore, the released condition is set intentionally to loosen any stuck knife, preventing an unintentional rotation of the shaft during normal operation.

Thus, in a preferred embodiment, during normal operation of the crop cutting device, the shaft is set in the locked condition and the plurality of knives is freely pivotable between the retracted position and the extended position, whereas in cases in which one or more knives of the plurality of knives are stuck in one of or in between the retraced position and the extended position, the shaft is set in the released condition to free any stuck knife. Preferably, the shaft comprises locking means, such as a plate, a bar or lever arm fixed to the shaft, which can be locked relative to the frame of the crop cutting device. For example, securing means, such as a pin, a bolt, or the like are provided to secure the locking means with respect to the frame. Preferably, the locking means comprises a first bore parallel to the shaft axis. The frame of the crop cutting device preferably comprises a second bore parallel to the first bore. When the shaft is in the first rotational position, the first bore and the second bore are aligned with each other. The securing means can then be inserted into the first and second bore to secure the shaft with respect to the frame.

In some embodiments, each knife of the plurality of knives comprises a through-hole, which at least partially defines a substantially cylindrical bearing surface. Preferably, the shaft comprises at least one support portion for supporting the plurality of knives. The at least one support portion may comprise at least one cylindrical support surface contacting the bearing surface of each of the plurality of knives to guide the rotational movement of the plurality of knives about the shaft axis. In this way, the plurality of knives is rotatably supported in a simple manner, such as a friction bearing between the bearing surface of each knife and the support portion of the shaft. This type of rotational support is very cost effective to produce and simple to maintain.

In general, although a substantially circular shape is preferred, the through-hole may have any shape and is not limited to a circular shape as long as it defines the cylindrical bearing surface at least in parts of its peripheral surface. Preferably, the bearing surface is an inner peripheral surface of the through-hole. The plurality of knives may be substantially flat and the through-hole penetrates the respective knife perpendicular to a flat extension of the respective knife, i.e. in an axial direction of the shaft.

With further advantage, the cylindrical support surface of the shaft can be an outer peripheral surface of the shaft or an outer peripheral surface of the at least one support portion of the shaft.

In one embodiment, the at least one support portion may extend in an axial direction of the shaft and support multiple knives or all knives of the plurality of knives. Alternatively, the shaft may comprise a plurality of support portions for supporting one knife or a subgroup of knives of the plurality of knives in each support portion. The at least one support portion may also comprise two cylindrical support surfaces, preferably on radially opposite sides of the shaft. In this way, the plurality of knives is properly supported on the shaft while minimizing friction between the bearing surfaces and the support surfaces.

In an embodiment, each knife of the plurality of knives comprises a slot extending from the through-hole in a direction parallel to a radial direction of the through-hole towards an outer surface of the knife. The slot allows mounting of each knife of the plurality of knives on the shaft. In particular, each knife can be moved such that the shaft is guided along the slot into the through-hole. The slot is very simple in design and allows the insertion of the shaft into the through-hole without axially moving and aligning the shaft relatively to the through-hole of each knife of the plurality of knives.

During mounting and in the mounted state, the through-hole and the shaft are coaxially aligned with each other. Preferably, the slot penetrates the respective knife perpendicular to the flat extension of the respective knife, i.e. in the axial direction of the shaft. Preferably, the slot is extending substantially straight from the through-hole towards an outer surface of the knife. Because of the aforementioned features, the crop cutting device can be quickly assembled, repaired and maintained.

The shaft, in particular the at least one support portion, may further comprise at least one substantially planar guide surface extending parallel to the shaft axis to allow mounting of the plurality of knives on the shaft via the slot of each of the plurality of knives. More particularly, the at least one guide surface is configured to guide the plurality of knives when they are mounted on the shaft by contacting a side surface of the substantially straight slot of each knife. The at least one planar guide surface thus defines an orientation of each knife relative to the shaft. The at least one planar guide surface preferably defines a plane parallel to the axial direction and to a tangential direction of the shaft.

In a preferred embodiment, the shaft and in particular the at least one support portion comprises two planar guide surfaces extending substantially parallel to each other. The two guide surfaces may be symmetrically or asymmetrically arranged with respect to the shaft axis. Preferably, a distance between the two guide surfaces is equal to or less than a width of the slot of each knife. In this way, each of the two guide surfaces may contact one of the side walls of the slot to guide the respective knife during installation. In addition, two cylindrical support surfaces as described above are inevitably formed by providing the two planar guide surfaces on the substantially cylindrical shaft. Hence, in the preferred embodiment, the at least one support portion comprises two planar guide surfaces and two cylindrical support surfaces. The two cylindrical support surfaces may then be arranged opposite to each other and may each extend from one guide surface to the other.

Preferably, the at least one guide surface also forms the first engaging means. When the first engaging means is integrally formed with the at least one guide surface, a synergistic effect can be achieved. No additional means need to be provided.

In embodiments, the second engaging means of each of the plurality of knives are defined by the through-hole and the slot and formed by a first end stop surface and a second end stop surface. In this manner, the second engaging means are integrally formed with the through-hole and the slot and can be manufactured during and by the same manufacturing process of the through-hole or the entire knife, e.g. by laser cutting.

The first end stop surface and the second end stop surface of a stuck knife preferably engage with the first engaging means during rotational movement of the shaft, thereby limiting the relative rotational movement between the shaft and the respective stuck knife.

In one embodiment, the first end stop surface is integrally formed with the slot and the second end stop surface is integrally formed with the through-hole. Additionally, the first end stop surface and the second end stop surface each limit the bearing surface in a circumferential direction. When the first end stop surface and the second end stop surface are integrally formed with the inner circumferential surfaces of the through-hole and the slot, respectively, a synergistic effect can be achieved via a simple two dimensional design.

Preferably, the first end stop surface is formed by a side wall of the slot. The first end stop surface may extend radially inwardly with respect to the cylindrical bearing surface. Preferably, the second end stop surface extends from the bearing surface inwardly. The first and second end stop surfaces may adjoin along a common edge. The common edge preferably extends in the axial direction of the through-hole and the shaft, respectively, and is arranged radially inwardly with respect to the cylindrical bearing surface.

In a preferred embodiment, the first end stop surface and the second end stop surface are substantially planar and arranged in an angle with respect to each other. Preferably, the first end stop surface and the second end stop surface are arranged in an angle of less than 120 degrees, more preferably equal or less than 90 degrees with respect to each other. The arrangement of the first end stop surface and the second end stop surface in an angle with respect to each other, which is preferably less than 120 degrees, provides sufficient room for free rotational movement of the respective knife between the retracted position and the extended position while, at the same time, allows to easily engage and loosen a stuck knife.

In one embodiment, the slot is narrower than a full diameter of the shaft. The full diameter is for example defined by the at least one cylindrical support portion. In this way, the shaft is securely held within the through-holes of the plurality of knives once mounted to prevent the plurality of knives from being unintentionally released during operation of the crop cutting device. Losing a knife during operation of the crop cutting device may result in major damage on the other knives or the rotary cutter, or even subsequent devices causing an immediate halt of the agricultural operation. The term "narrower" may be defined in that the distance of two opposing inner surfaces of the slot being less than the full diameter of the shaft.

In another embodiment, however, the width of the slot may be equal to or larger than the full diameter of the shaft. In this case, the shaft and/or the plurality of knives may comprise securing means for securing the plurality of knives on the shaft. Further, the first and second engaging means may then comprise additional components and/or sections of the plurality of knives and the shaft.

In some embodiments, the shaft comprises a third rotational position, in which each knife of the plurality of knives can be mounted on or removed from the shaft via said slot. The third rotational position may therefore also be referred to as a mounting position. Preferably, the third rotational position is different from the first and second rotational positions. In this way, unintentional removal of a knife during operation of the crop cutting device can be avoided. However, the third rotational position may also correspond to the first rotational position.

Only in the third rotational position, the plurality of knives can be oriented in a way to mount them on the shaft. In this orientation, the at least one guide surface of the shaft is arranged parallel to the slot, in particular to the side walls of the slot, and the knives may therefore be attached to the shaft via the slot. However, the plurality of knives will not adopt this position during normal operation, i.e. between the retracted and the extended position, and are therefore secured on the shaft. Preferably, during normal operation of the crop cutting device, the at least one guide surface of the shaft is arranged at an angle to the side walls of the slot, such that the shaft cannot pass through the slot, even when the plurality of knives is pivoted between the retracted and the extended positions.

Preferably, the shaft comprises at least one coupling portion configured to be coupled to a drive means. In general, the drive means enables to apply torque on the shaft to loosen any stuck knife.

In one embodiment, the coupling portion preferably comprises a screw head or the like, most preferably a hexagonal screw head. The drive means preferably includes a handheld tool such as a lever, a wrench, a ratchet, an impact wrench or the like. The use of a handheld tool provides an easy and inexpensive form of drive means enabling a user of the cutting device to loosen any stuck knife. A screw head is a common coupling design and, for example, has an inner or outer hexagonal shape, a slotted or cruciform shape to be coupled to a tool for applying torque. The screw head may comprise any screw head design known in the art. Alternatively, the coupling portion may comprise a through-hole penetrating through the shaft, enabling an insertion of a bar to turn the shaft.

In addition or alternatively, the cutting device, and in particular the drive means, may comprise an actuator configured to rotate the shaft between the first and second rotational positions. The actuator may comprise an electric, pneumatic, or hydraulic drive, e.g. a servo drive or a cylinder assembly, coupled to the coupling portion of the shaft.

In one embodiment, the actuator may further be configured to operate the actuating system of the crop cutting device to move the plurality of knives between the retracted position and the extended position as described above. Due to the actuation of the shaft by the actuator, any knife can be effortlessly released if stuck. In addition, production costs and the weight of the crop cutting device can be decreased of the actuator already present for moving the plurality of knives between the retracted position and the extended position is also utilized to actuate the shaft. The actuator may be selectively engageable with the shaft, so that an operator of the crop cutting device can selectively use the actuator to rotate the shaft. For example, the actuator is coupled to the shaft via a clutch mechanism.

At least when the coupling portion is configured to be coupled to a handheld drive means, the coupling portion is preferably accessible to the operator from the outside of the crop cutting device. In this way, disassembling parts of the crop cutting device is not required, whereas, upon recognizing a stuck knife, a quick reaction in order to loosen the respective stuck knife is facilitated and the downtime of the crop cutting device is reduced. Also, the safety of the operator is increased.

In a preferred embodiment, the coupling portion is arranged on at least one end of the shaft laterally outside of the frame of the crop cutting device. Because of this, the coupling portion is easily accessible to the operator from the outside. Alternatively, the coupling portion is arranged in another position along the axial direction of the shaft being accessible to the operator from the outside.

According to a further aspect of the present invention, an agricultural machine, in particular a baler, such as a square baler, in particular a large square baler, comprising a crop cutting device according to the present invention is provided. The agricultural machine may be self-propelled or moved by a traction vehicle, such as a tractor. The agricultural machine is moved over a field to be harvested, wherein the direction of movement can be referred to as the harvesting direction. All features of the crop cutting device described herein are applicable to the crop cutting device of the agricultural machine and vice versa.

According to another aspect of the invention, a method of loosening at least one stuck knife of a plurality of knives of a crop cutting device is provided. The crop cutting device comprises a rotatably supported shaft comprising a first rotational position. The plurality of knives is arranged side-by-side with respect to an axial direction of the shaft and pivotally mounted on the shaft between a retracted position and an extended position, when the shaft is in the first rotational position. The shaft further comprises first engaging means and each knife of the plurality of knives comprises second engaging means.

The method according to the present invention further comprises the steps of:
- rotating the shaft from the first rotational position in a clockwise or a counterclockwise direction towards a second rotational position until the first engaging means engage with the second engaging means of the at least one knife stuck in one of or between the retracted position and the extended position;
- rotating the shaft further in the same direction to force the at least one stuck knife in one of the retracted position and the extended position, thereby loosening the at least one knife.

Preferably, the method is carried out by the crop cutting device according to the present invention or the agricultural machine. All features described with respect to the crop cutting device herein are therefore applicable to the method according to the invention and vice versa. It should also be noted that functional features described with respect to the crop cutting device may be formulated as method steps and vice versa.

Further features and advantages of the present invention will now be described with reference to the accompanying drawings.
- Fig. 1a: is a schematic side view of an agricultural machine in the form of an agricultural baler.
- Fig. 1b: is a detailed view of the agricultural machine of Fig. 1a showing a crop cutting device and a stuffer mechanism of the agricultural machine.
- Fig. 2: is a perspective exploded view of major components of a crop cutting device according to a preferred embodiment of the present invention.
- Fig. 3: is a side view of the crop cutting device according to Fig. 2.
- Fig. 4: is a side view of the crop cutting device according to the embodiment shown in Figs. 2 and 3, wherein the shown knife is in a retracted position and the shaft is in a first rotational position.
- Fig. 5: is a side view of the crop cutting device according to the embodiment shown in Figs. 2 and 3, wherein the shown knife is in the retracted position and the shaft is rotated out of the first rotational position.
- Fig. 6: is a side view of the crop cutting device according to the embodiment shown in Figs. 2 and 3, wherein the shown knife is in the extended position and the shaft is rotated out of the first rotational position.
- Fig. 7: is a perspective view of the crop cutting device according to an embodiment having an actuator for freeing any stuck knife.

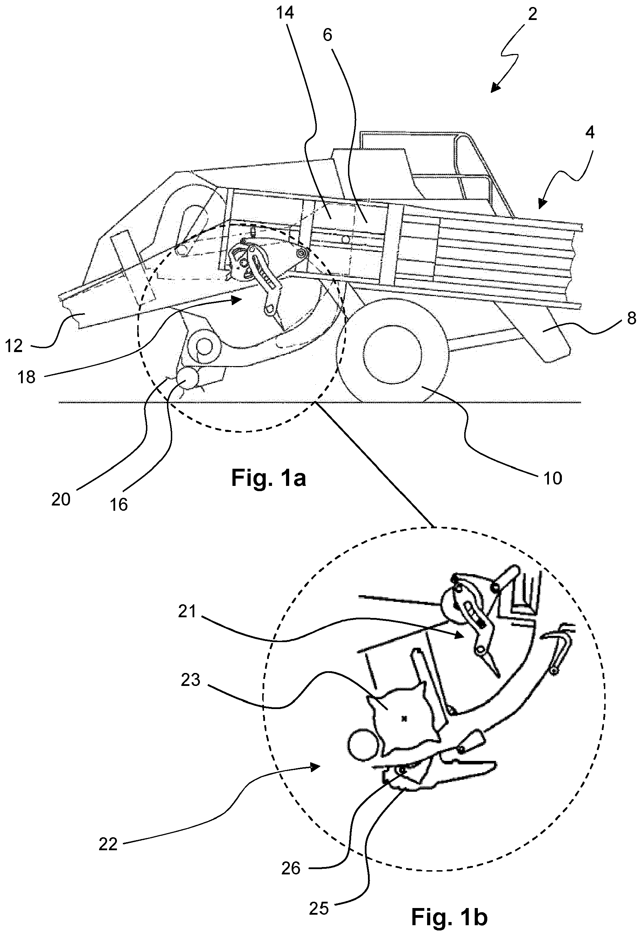

In fig. 1a, an agricultural baler 2 is shown in a side view. The baler 2 comprises a bale case 4 extending in a fore-and-aft direction of the baler 2 and defining a baling chamber 6, in which a bale is to be formed. The bale case 4 is supported by a frame 8 of the baler 2, which in turn is carried by ground-engaging wheels 10. A forwardly extending tongue 12 is provided on the baler 2 to hitch the baler 2 to a traction vehicle (not shown), such as a tractor, for advancing the baler 2 across a field. A plunger 14 is provided and configured to reciprocally move in the fore-and-aft direction of the baler 2 within the baling chamber 6 for periodically compacting crop material fed into the baling chamber 6. The baler 2 further comprises a pick-up unit 16 for picking up windrowed crop material from the field and delivering the crop material rearward towards a stuffer assembly 18 of the baler 2. The pick-up unit 16 may have a plurality of lifting tines 20 sweeping up crop material from the field.

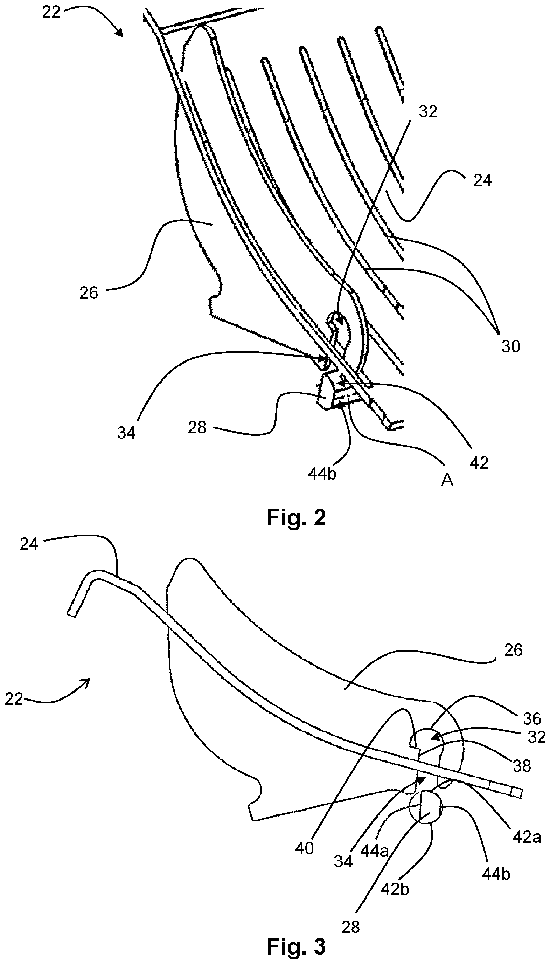

As can be seen in fig. 1b, a crop cutting device 22 and a stuffer mechanism 21 are provided rearward of the pick-up unit 16 in a known manner. The crop cutting device 22 comprises a rotary cutter 23 and a knife drawer 25 in which a plurality of knives 26 is provided as will now be explained with reference to fig. 2.

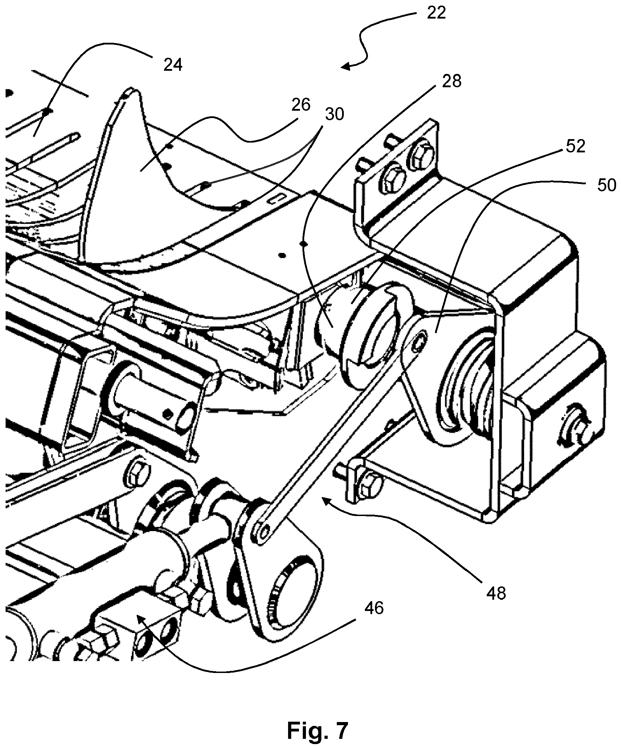

Fig. 2 shows major components of the crop cutting device 22 according to a preferred embodiment of the present invention. The crop cutting device 22 comprises a crop guiding plate 24 over which the harvested and picked up crop is transferred, the plurality of knives 26 and a shaft 28, on which the plurality of knives 26 is pivotally mounted. In fig. 2, only one knife 26 of the plurality of knives 26 is shown for the sake of a better overview and understanding of the present invention. The description herein, however, is applicable to all of the plurality of knives 26 of the cutting device 22. In the exploded view of fig. 2 and 3, the knife 26 is arranged above the shaft 28 in a height direction of the cutting device 22. The shaft 28 is supported in a frame (see fig. 7) of the cutting device 22, such as in knife drawer 25, below the crop guiding plate 24.

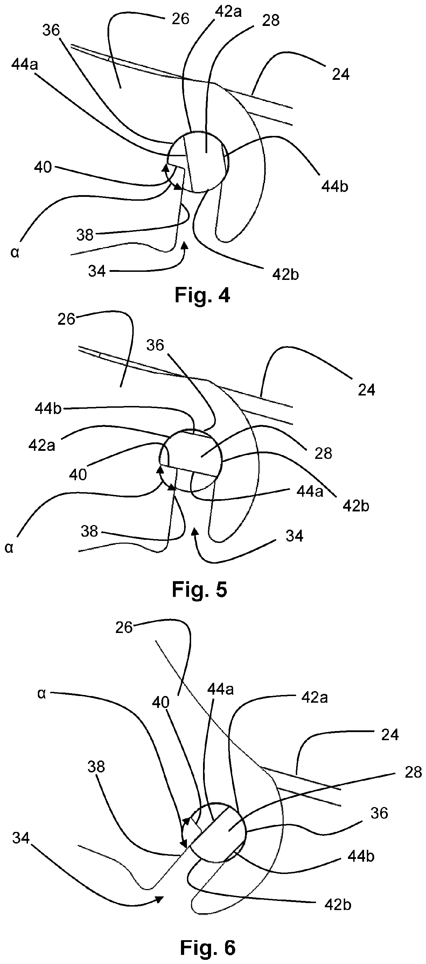

The knife 26 may be partially arranged within a corresponding slot 30 provided in the crop guiding plate 24 and may extend through the corresponding slot 30. As can be seen in fig. 2, a plurality of slots 30 is provided, preferably one slot 30 for each knife 26 of the plurality of knives 26. In a mounted condition, the knife 26 is freely pivotable about a shaft axis A between a retracted position (fig. 4) and an extended position (fig. 6). In the extended position, the knife 26 extends through the slot 30 and above the crop guiding plate 24 into a crop flow to act as a counter knife in operative association with a rotary cutter 23 (shown in fig. 1b) of the cutting device 22. In the retracted position, the knife 26 is arranged below the crop guiding plate 24 and does not interact with the crop material. The knife 26 is formed substantially flat and is preferably made of a sheet metal. The knife 26 comprises a through-hole 32 supporting the knife 26 on the shaft 28. For this reason, the through-hole 32 defines a substantially cylindrical bearing surface 36 to allow rotation of the knife 26 about the shaft axis A. The through-hole 32 is positioned in a fore position of the knife 26 with respect to the advancing or harvesting direction of the baler 2.

The knife 26 further comprises a slot 34 in direct communication with the through-hole 32 enabling insertion of the shaft 28 along the slot 34 into the through-hole 32. The slot 34 of the knife 26 extends from the through-hole 32 in a radial direction of the through-hole 32 towards an outer surface of the knife 26, preferably towards a back of the knife 26. In a mounted condition of the knife 26, the slot 34 also extends perpendicular to the shaft axis A as shown in fig. 4-6.

In the preferred embodiment shown in the figures, the shaft 28 comprises at least one support portion 42 for supporting the plurality of knives 26. One support portion 42 may extend in the axial direction of the shaft 28 to support all knives 26, or one support portion 42 of a plurality of support portions 42 may be provided for each knife 26 or for a group of knives 26.

In any case, the at least one support portion 42 may comprise at least one and preferably two opposing support surfaces 42a, 42b rotatably supporting the knife 26. Each of the two support surfaces 42a, 42b is an outer circumferential surface having a substantially cylindrical cross section, which, in an assembled condition, is configured to contact the bearing surface 36 within the through-hole 32 of the knife 26.

In the preferred embodiment shown in the figures, the shaft 28 further comprises two substantially planar guide surfaces 44a, 44b extending parallel to each other and to the shaft axis A. The guide surfaces 44a, 44b allow for mounting the knife 26 onto the shaft 28 via the slot 34 of the knife 26. For this reason, a distance between the two guide surfaces 44a, 44b is equal to or less than a width of the slot 34. Consequently, the guide surfaces 44a, 44b may be arranged in parallel to side walls of the slot 34, thereby allowing insertion of the shaft 28 through the slot 34. During insertion of the shaft 28, the shaft 28 is guided along the slot 34 by means of the guide surfaces 44a, 44b. Similar to the at least one support portion 42, the guide surfaces 44a, 44b may extend along the shaft 28 to allow each knife 26 of the plurality of knives 26 to be mounted on the shaft 28, or a pair of guide surfaces 44a, 44b may be provided in each of a plurality of support portions 42. Preferably, the slot 34 is narrower than a full diameter of the shaft 28 in the area of the support surfaces 42a, 42b, thereby securing the knife 26 on the shaft 28.

In fig. 4, the shaft 28 is arranged in a first rotational position shown, preferably in a locked condition. In the first rotational position, the knife 26 is freely rotatable between the retracted position and the extended position. The crop cutting device 22 is operated with the shaft 28 in the first rotational position, which may also be referred to as normal operation or harvesting condition of the crop cutting device 22.

However, due to contamination of the cutting device 22 by crop material and foreign matter, the knives 26 may get stuck in the crop guiding plate 24 and refuse to rotate, e.g. back into the retracted position. According to the present invention, the crop cutting device 22 is therefore configured to allow rotation of the shaft 28 from the first rotational position towards a second rotational position to force the at least one stuck knife 26 into one of the retracted position and the extended position, thereby loosening the at least one stuck knife 26.

In order to do so, the shaft 28 comprises first engaging means and each knife 26 of the plurality of knives 26 comprises second engaging means. When the shaft 28 is rotated from the first rotational position towards the second rotational position, the first and second engaging means engage with each other, thereby forcing the knife 26 in the desired direction.

A particularly simple embodiment of the invention is shown in the figures. In this embodiment, the at least one guide surface 44a of the shaft 28 forms the first engaging means 44a. The second engaging means of the knife 26 may in this case be formed by a first end stop surface 38 and a second end stop surface 40 limiting the bearing surface 36 in both, a clockwise and a counterclockwise direction. In a preferred embodiment, the first end stop surface 38 is integrally formed with the slot 34, in particular with a side wall of the slot 34, and the second end stop surface 40 is integrally formed with the through-hole 32. The first end stop surface 38, i.e. the side wall of the slot 34, and the second end stop surface 40 may extend inwardly with respect to the bearing surface 36.

The first end stop surface 38 and the second end stop surface 40 are substantially planar and the two opposing guide surfaces 44a, 44b of the shaft 28 are substantially planar as well. Here, the first and second end stop surfaces 38, 40 adjoin along a common edge arranged radially inwardly with respect to the cylindrical bearing surface 36. The first end stop surface 38 and the second end stop surface 40 are arranged in an angle α with respect to each other. In this preferred embodiment, the angle α is about 90 degrees, but the angle α can be substantially larger or smaller depending on the necessary free rotational movement of the respective knife 26 about the shaft axis A.

The first engaging means 44a, b and the second engaging means 38, 40 are preferably configured to perform positive locking with each other, when the shaft 28 is rotated towards the second rotational position. In the embodiment shown, only one guide surface 44a of the two guide surfaces 44a, 44b is configured to get into contact with the first end stop surface 38 and the second end stop surface 40 as will now be described under reference to figs. 5 and 6.

In figs. 5 and 6, positive locking between the guide surface 44a and the end stop surfaces 38, 40 can be seen in an enlarged view. When the knife 26 is stuck between the extended position and the retracted position, the shaft 28 may be rotated towards the second rotational position. Compared to fig. 4 indicating the first rotational position of the shaft 28, the shaft 28 in fig. 5 is turned in a counterclockwise direction such that the guide surface 44a of the shaft 28 comes into contact with the second end stop surface 40 of the through-hole 32. Rotating the shaft 28 still further in the counterclockwise direction towards the second rotational position will force the knife 26 into the retracted position as shown in fig. 5.

Referring now to fig. 6, the knife 26 is arranged in the extended position, in which the knife 26 extends through the crop guiding plate 24. Compared to fig. 4 indicating the first rotational position of the shaft 28, the shaft 28 is now rotated in a clockwise direction towards the second rotational position. Hence, at some point, the guide surface 44a comes into contact with the first end stop surface 38 of the through-hole 32. Rotating the shaft 28 still further in the clockwise direction will force the knife 26 into the extended position as shown in fig. 6.

The contact between the substantially planar second end stop surface 40 and the substantially planar guide surface 44a enables positive locking between these two elements. Due to positive locking, torque applied to the shaft 28 can be transferred to the knife 26 thereby loosening the stuck knife 26 and bringing it into the desired position. The torque is applied via drive means, such as a wrench, coupled to the coupling portion 52 on one end portion of the shaft 28 (not shown). The coupling portion 52 preferably comprises a (hexagonal) screw head (not shown) to enable coupling with the drive means. The screw head may also be coupled with other handheld tools or power tools to facilitate rotation of the shaft 28.

Turning now to fig. 7, the crop cutting device 22 is shown in a perspective view. The crop cutting device 22 comprises an actuator 46, which is configured to move the shaft 28 between the first and second rotational positions, thereby forcing any stuck knife 26 towards the retracted or extended position. The actuator 46 shown in fig. 7 is a hydraulic cylinder coupled to the coupling portion 52 of the shaft 28 via a linkage 48 and an excentric lever arm 50. In this embodiment, the actuator 46 is further configured to operate the actuating system (not shown) of the crop cutting device 22, which is configured selectively move the plurality of knives 26 between the retracted position and extended positions. One can deduct from fig. 7, that when the actuator 46 is extended or retracted to operate the actuating system, the shaft 28 may simultaneously be rotated between the first and second rotational positions. Therefore, a clutch mechanism may be provided to couple the actuator 46 with the coupling portion 52. The actuator and/or the clutch mechanism may be remotely controllable by the operator. In any case, the operator does not need to remove the knife drawer 25 and/or act directly on the knives 26 in order to loosen the at least one stuck knife 26.

Hence, the present invention provides a crop cutting device 22 for an agricultural machine, an agricultural machine comprising the crop cutting device 22 and a method for loosening at least one stuck knife 26 of the plurality of knives 26 of the crop cutting device 22, which provide a quick and safe way to loosen stuck knives 26 and which prevent the knives 26 from damages.

## Claims

1. Crop cutting device (22) for an agricultural machine, in particular for a baler (2), comprising:
a shaft (28) rotatably supported by a frame of the crop cutting device (22);
a plurality of knives (26) arranged side-by-side with respect to an axial direction of the shaft (28) and pivotally mounted on the shaft (28);
wherein the shaft (28) comprises a first rotational position, in which the plurality of knives (26) is freely pivotable with respect to the shaft (28) between a retracted position and an extended position, and wherein the shaft (28) is configured to be selectively rotatable from the first rotational position in a clockwise or a counterclockwise direction towards a second rotational position; and
wherein the shaft (28) comprises first engaging means (44a) and each knife (26) of the plurality of knives (26) comprises second engaging means (38, 40), wherein the first engaging means (44a) and the second engaging means (38, 40) are configured to engage with each other, preferably by positive locking, when the shaft (28) is rotated from the first rotational position towards the second rotational position to force at least one knife (26) of the plurality of knives (26) into one of the retracted position and the extended position.

2. Crop cutting device (22) according to claim 1, **characterized in that** the crop cutting device (22) further comprises an actuating system configured to move the plurality of knives (26) between the retracted position and the extended position.

3. Crop cutting device (22) according to one of the previous claims, **characterized in that** the shaft (28) comprises a locked condition, in which it is locked in the first rotational position, preferably by interaction with the frame of the crop cutting device (22), and comprises a released condition, in which it is rotatable towards the second rotational position.

4. Crop cutting device (22) according to one of the previous claims, **characterized in that**:
each knife (26) of the plurality of knives (26) comprises a through-hole (32), which at least partially defines a substantially cylindrical bearing surface (36); and
the shaft (28) comprises at least one support portion (42) for supporting the plurality of knives (26), wherein the at least one support portion (42) comprises at least one cylindrical support surface (42a, 42b) contacting the bearing surfaces (36) of the plurality of knives (26) to guide the rotational movement of the plurality of knives (26) about the shaft axis (A).

5. Crop cutting device (22) according to claim 4, **characterized in that**:
each knife (26) of the plurality of knives (26) comprises a slot (34) extending from the through-hole (32) in a direction parallel to a radial direction of the through-hole (32) towards an outer surface of the knife (26).

6. Crop cutting device (22) according to claim 5, **characterized in that**:
the shaft (28) comprises at least one substantially planar guide surface (44a, 44b) extending parallel to the shaft axis (A) to allow mounting of the plurality of knives (26) on the shaft (28) via the slot (34) of each of the plurality of knives (26), wherein preferably the at least one guide surface (44a) forms the first engaging means (44a).

7. Crop cutting device (22) according to claims 5 or 6, **characterized in that** the second engaging means (38, 40) of each of the plurality of knives (26) are defined by the through-hole (32) and the slot (34) and formed by a first end stop surface (38) and a second end stop surface (40).

8. Crop cutting device (22) according to claim 7, **characterized in that** the first end stop surface (38) is integrally formed with the slot (34) and the second end stop surface (40) is integrally formed with the through-hole (32), the first end stop surface (38) and second end stop surface (40) limiting the bearing surface (36) in a circumferential direction.

9. Crop cutting device (22) according to claims 7 or 8, **characterized in that** the first end stop surface (38) and the second end stop surface (40) are substantially planar and arranged in an angle (α) with respect to each other, preferably in an angle (α) of less than 120 degrees, more preferably equal or less than 90 degrees.

10. Crop cutting device (22) according to any one of claims 5 to 9, **characterized in that** the slot (34) is narrower than a full diameter of the shaft (28).

11. Crop cutting device (22) according to claims 5 to 10, **characterized in that** the shaft (28) comprises a third rotational position different from the first and second rotational positions, in which each knife (26) of the plurality of knives (26) can be mounted on or removed from the shaft (28) via said slot (34).

12. Crop cutting device (22) according to one of the previous claims, **characterized in that** the shaft (28) comprises at least one coupling portion (52) configured to be coupled to a drive means for rotating the shaft (28).

13. Crop cutting device (22) according to claim 12, **characterized in that**
the coupling portion comprises a screw head and the drive means includes a handheld tool such as a lever, a wrench, a ratchet, or an impact wrench, and/or
the drive means comprises an actuator (46) configured to rotate the shaft between the first rotational position and the second rotational position, the actuator (46) preferably being further configured to operate an actuating system of the crop cutting device (22) for selectively moving the plurality of knives (26) between the retracted position and the extended position.

14. Agricultural machinery, in particular a baler (2), comprising a crop cutting device (22) according to one of the previous claims.

15. Method of loosening at least one stuck knife (26) of a plurality of knives (26) of a crop cutting device (22) comprising a rotatably supported shaft (28) having a first rotational position, and the plurality of knives (26) arranged side-by-side with respect to an axial direction of the shaft (28) and pivotally mounted on the shaft (28) between a retracted position and an extended position, when the shaft (28) is in the first rotational position, wherein the shaft (28) comprises first engaging means (44a) and each knife (26) of the plurality of knives (26) comprises second engaging means (38, 40);
wherein the method comprises the steps of:
- rotating the shaft (28) from the first rotational position in a clockwise or a counterclockwise direction towards a second rotational position until the first engaging means (44a) engage with the second engaging means (38, 40) of the at least one knife (26) stuck in one of or in between the retracted position and the extended position;
- rotating the shaft (28) further in the same direction to force the at least one stuck knife (26) in one of the retracted position and the extended position, thereby loosening the at least one knife (26).
